# EUROPÄISCHE PATENTANMELDUNG

(11) **EP 1 972 868 A2**
(43) Veröffentlichungstag der Anmeldung: **24.09.2008**
(21) Anmeldenummer: 08004872.1
(22) Anmeldetag: 14.03.2008
(51) Int. Cl.: F24J 2/54, E05F 15/12

(54) **Positionierantrieb und Solarmodul-Positioniervorrichtung mit wenigstens einem Positionierantrieb**

(30) Priorität: 20.03.2007 DE 102007021521
(71) Anmelder: Ruck, Reinhold, 72669 Unterensingen (DE)
(72) Erfinder: Ruck, Reinhold, 72669 Unterensingen (DE)
(74) Vertreter: Jakelski, Joachim

(57) **Zusammenfassung**

Die Erfindung betrifft einen Positionierantrieb (12a, 12b) mit einem stationär angeordneten Antriebsmotor (50), der ein Ritzel (54a, 54b) antreibt, das in Kettenglieder (102a, 102b, 102c, 102d, 102e, 102f) eines Kettensegments (90a, 90b) eingreift, welches einem zu positionierenden Teil (56a, 56b) zugeordnet ist. Zumindest diejenigen Kettenglieder (102c, 102d, 102e, 102f) des Kettensegments (90a, 90b) sind auf der Oberfläche (94) des zu positionierenden Teils (56a, 56b) abgestützt, in welche das Ritzel (54a, 54b) eingreift, und zumindest die zur Abstützung der Kettenglieder (102c, 102d, 102e, 102f) vorgesehene Oberfläche (94) ist in Bezug auf das Ritzel (54a, 54b) konvex gekrümmt. Die Zähne des Ritzels (54a, 54b) sind derart bemessen, dass zwischen dem Ritzel (54a, 54b) und dem Kettensegment (90a, 90b) eine Triebstockverzahnung vorliegt. Der erfindungsgemäße Positionierantrieb (12a, 12b) zeichnet sich durch einen einfachen, robusten, wartungsarmen Aufbau aus und weist einen hohen Wirkungsgrad auf. Aufgrund der Vorteile ist der erfindungsgemäße Positionierantrieb (12a, 12b) insbesondere geeignet zur Verwendung in einer erfindungsgemäßen Solarmodul-Positioniereinrichtung (10), die aufgrund der weitgehenden Realisierung mit Profilelementen (26a, 28a, 28b, 30a, 30b, 32a, 32b, 70, 72a, 72b, 74a, 74b, 76a, 76b) besonders einfach transportiert und aufgebaut werden kann.

## Beschreibung

### Stand der Technik

Die Erfindung geht aus von einem Positionierantrieb nach der Gattung des unabhängigen Anspruchs.

Die Erfindung betrifft weiterhin eine Solarmodul-Positioniervorrichtung, die wenigstens einen Positionierantrieb enthält.

In der DE 103 00 653 A1 ist ein Positionierantrieb für ein Fenster beschrieben, welches einen Flügel enthält, der verschwenkbar an einem Blendrahmen angeordnet ist. Das Verschwenken des Flügels erfolgt mittels einer Kette, welche bei zusammengeschobenen Kettengliedern knicksteif ist. Eine Stirnseite der Kette ist mit einer Schubstange kraftschlüssig verbunden. Die Kette und die Schubstange sind Teil eines Positionierantriebs, der einen Elektromotor mit einem Ritzel enthält, welches die Schubstange in einer linearen Bewegung direkt antreibt. Die knickfeste Kette ist um ein Umlenkzahnrad geführt, welches an seinem Außenumfang Zähne aufweist, die einen derartigen Abstand voneinander haben, dass die einzelnen Kettenglieder bei der Umlenkung soweit auseinander gedrückt werden, dass die einzelnen Kettenglieder entkoppelt werden, wodurch die Knickfestigkeit aufgehoben und eine Drehbewegung zwischen benachbarten Kettengliedern ermöglicht wird. Das Umlenkzahnrad dient ausschließlich der Umlenkung der in beiden Richtungen knickfesten Kette und hat selbst keine Antriebsfunktion.

In der DE 200 22 746 U1 ist eine Öffnungsvorrichtung zum Öffnen eines Oberlicht-Fensterflügels beschrieben, welche ebenfalls eine knickfeste Kette zum Verschwenken des Flügels aufweist. Der Positionierantrieb weist ein Zahnrad auf, welches einerseits zur Umlenkung der Kette dient und andererseits für den Antrieb der Kette zuständig ist. Das Zahnrad ist als Antriebsritzel für die Kette ausgestaltet. Auf der gleichen Welle ist ein weiteres Zahnrad angeordnet, welches von einer Schubstange betätigt wird, die einen Abschnitt enthält, der als Zahnstange ausgebildet ist. Die Schubstange kann zum einen elektromotorisch linear bewegt werden. Zum anderen kann die Schubstange, deren Länge in weiten Grenzen variierbar ist, für eine manuelle Betätigung des Oberlicht-Fensterflügels ausgestaltet werden.

In der DE 101 35 659 A1 ist eine Fördereinrichtung zur Förderung von Gegenständen beschrieben, die eine Seitenbogenkette enthält, welche sich dadurch auszeichnet, dass die einzelnen Laschen der Kette über besonders ausgebildete, sich von der Mitte ausgehend in beide Richtungen konisch verjüngende Bolzen untereinander verbunden sind. Diese Ausbildung ermöglicht neben der Übertragung der Zugkräfte und der Umlenkung der Kette über Kettenräder auch deren Beweglichkeit quer zur Längserstreckung, sodass beliebige Kurvenverläufe vorgegeben werden können. Die frei bewegliche Seitenbogenkette, die über beabstandet angeordnete Stützräder geführt ist, wird von einem Antriebsmotor mittels eines Ritzels angetrieben.

Die DE 200 00 261 U1 beschreibt ein frei tragendes Schiebetor, das mittels eines Kettenantriebs geöffnet und geschlossen werden kann. Vorgesehen ist eine stationär angeordnete Antriebsstation, die einen Elektromotor enthält, der ein Ritzel antreibt. Die Kette ist auf der Unterseite des Schiebetors frei verlegt und wird durch Spannvorrichtungen an beiden Enden des Schiebetors gespannt. Zur Führung der Kette sind Führungsrollenpaare vorgesehen, die in der Antriebsstation angeordnet sind. Die Antriebsstation enthält neben dem Antriebsritzel und den Führungsrollen zwei Umlenkritzel, welche eine Umlenkung der Kette aus der Spannrichtung der Kette heraus und eine Führung der Kette um das Antriebsritzel herum ermöglichen, wodurch ein großer Umschlingungswinkel der Kette am Antriebsritzel erzielt wird.

Die DE 101 44 601 A1 beschreibt eine Positioniervorrichtung für ein Fotovoltaik-Solarmodul, die eine Nachführung des Solarmoduls in Abhängigkeit vom Datum und in Abhängigkeit von der Tageszeit ermöglicht, wobei eine Anpassung der installation an die geografische Breite sowohl auf der Nordals auch auf der Südhalbkugel möglich ist. Der Positionierantrieb enthält einen Schrittmotor, der sich einmal in 24 Stunden um ein feststehendes Ritzel dreht, und eine 365,25 zu 1 mechanische Untersetzung über ein Zahnradgetriebe auf ein Jahreszahnrad bewirkt, welches frei drehend auf der Motorachse über dem Ritzel sitzt. Das Jahreszahnrad erzeugt im Zusammenwirken mit einem darüber liegenden, auf der gleichen Welle festsitzenden weiteren Ritzel eine lineare Bewegung einer zahnriemengestützten gelenkigen Pleuelsteuerung zur Positionierung des Trägers des Fotovoltaik-Solarmoduls gemäß der jahreszeitlichen Änderung des Sonnenstandes.

Das Gebrauchsmuster DE 298 18 339 U1 zeigt einen Kettenschubantrieb für beispielsweise einen Fensterflügel, bei dem eine Kette ein Antriebsritzel zumindest teilweise umschließt. Die Kette ist in Bezug auf das Antriebsritzel konkav gekrümmt. Das Antriebsritzel wird vorzugsweise mit einer Zyklolden-Verzahnung oder einer ähnlichen Verzahnung, beispielsweise einer Art Triebstockverzahnung ausgestaltet.

Die DE 103 01 550 A1 beschreibt ebenfalls eine Positioniervorrichtung für ein Fotovoltaik-Solarmodul. Ein stationär angeordneter Antriebsmotor treibt ein Ritzel an, das in Kettenglieder eines Kettensegments eingreift, welches einem zu positionierenden Teil der Positioniervorrichtung zugeordnet ist. Die Kettenglieder sind auf der Oberfläche des zu positionierenden Teils abgestützt, in welche das Ritzel eingreift. Das Kettensegment ist hierbei in Bezug auf das Ritzel konvex gekrümmt. Die konkrete Ausgestaltung der Verzahnung zwischen dem Ritzel und dem Kettensegment ist offen gelassen.

In dem Fachbuch "Taschenbuch für den Maschinenbau", Dubbel, Springer-Verlag Berlin Heidelberg New York London Paris Tokio 1987, Seite G 115 sind eine Triebstockverzahnung sowie deren Bemessung angegeben.

Der Erfindung liegt die Aufgabe zugrunde, einen einfachen, robusten und insbesondere effizienten und wartungsarmen Positionierantrieb und eine Solarmodul-Positioniervorrichtung anzugeben.

Die Aufgabe wird durch die in den unabhängigen Ansprüchen angegebenen Merkmale jeweils gelöst.

### Offenbarung der Erfindung

Der erfindungsgemäße Positionierantrieb geht von einem stationär angeordneten Antriebsmotor aus, der ein Ritzel antreibt, das in Kettenglieder eines Kettensegments eingreift, welches einem zu positionierenden Teil zugeordnet ist, wobei zumindest diejenigen Kettenglieder des Kettensegments auf der Oberfläche des zu positionierenden Teils abgestützt sind, in welche das Ritzel eingreift und wobei zumindest die zur Abstützung der Kettenglieder vorgesehene Oberfläche in Bezug auf das Ritzel konvex gekrümmt ist. Der erfindungsgemäße Positionierantrieb zeichnet sich dadurch aus, dass die Zähne des Ritzels derart bemessen sind, dass zwischen dem Ritzel und dem Kettensegment eine Triebstockverzahnung vorliegt.

Anhand von Versuchsreihen wurde festgestellt, dass sich die an sich seit langer Zeit bekannte Triebstockverzahnung, die heute weitgehend durch andere Verzahnungen ersetzt ist, zum Einsatz bei der erfindungsgemäßen Positioniereinrichtung besonders eignet.

Anhand von Versuchsreihen hat sich gezeigt, dass der erfindungsgemäße Positionierantrieb mit der zwischen dem Ritzel und dem Kettensegment vorliegenden Triebstockverzahnung einerseits besonders kostengünstig realisiert werden kann und andererseits dennoch äußerst robust ist.

Langzeittests haben ergeben, dass der erfindungsgemäße Positionierantrieb mit der zwischen dem Ritzel und dem Kettensegment vorliegenden Triebstockverzahnung äußerst verschleißarm ist. Der erfindungsgemäße Positionierantrieb wird dadurch besonders wartungsarm und über einen langen Betriebszeitraum sogar wartungsfrei. Ein jahrelang störungs- und wartungsfreier Betrieb ist insbesondere in der Solartechnik für deren Akzeptanz wesentlich.

Aufgrund der konvexen Krümmung des Kettensegments gegenüber dem Ritzel tritt keine Umschlingung des Ritzels durch das Kettensegment auf. Das Ritzel und das Kettensegment weisen nur einen minimalen Kontakt auf, sodass sich ein besonders hoher Wirkungsgrad des Antriebs ergibt, der insbesondere in der Solartechnik hohe Bedeutung hat. Durch die geringe Reibung wird nur eine minimale elektrische Energie zur Positionierung des zu positionierenden Teils benötigt.

Die Länge des Kettensegments ist frei wählbar, wodurch der erfindungsgemäße Positionierantrieb ohne Änderungsaufwand an die jeweilige Positionierungsaufgabe angepasst werden kann.

Durch die Ausgestaltung des erfindungsgemäßen Positionierantriebs mit einem Ritzel, das mit einem beispielsweise als Rollenkette ausgestalteten Kettensegment zusammenwirkt, wird insgesamt ein preiswerter, einfacher, robuster Positionierantrieb mit geringem Wartungsbedarf bereitgestellt, der darüber hinaus einen minimalen Energiebedarf beziehungsweise einen hohen Wirkungsgrad aufweist.

Vorteilhafte Weiterbildungen und Ausgestaltungen des erfindungsgemäßen Positionierantriebs ergeben sich aus abhängigen Ansprüchen.

Eine Ausgestaltung sieht vor, dass auf beiden Seiten des Kettensegments Kettensegmentführungen angeordnet sind. Die Kettensegmentführungen tragen zur Fixierung des Kettensegments auf dem zu positionierenden Teil bei.

Eine Ausgestaltung sieht vor, dass ausschließlich die beiden Enden des Kettensegments am zu positionierenden Teil fixiert sind. Dadurch wird mit minimalem Aufwand eine Fixierung der Kette erzielt.

Eine vorteilhafte Ausgestaltung sieht vor, dass an einem Ende des Kettensegments ein Kettenspannelement vorgesehen ist. Das Kettenspannelement ermöglicht den Ausgleich einer Dehnung des Kettensegments während des Betriebs des Positionierantriebs. Das Kettenspannelement kann gemäß einer vorteilhaften Ausgestaltung eine quer zur Kettensegment-Richtung eingebrachte Kerbe aufweisen, in welche ein am zu positionierenden Teil angeordneter Gewindestift zum Nachspannen des Kettensegments eingedreht werden kann, der am vorderen Ende vorzugsweise eine Abschrägung aufweist.

Gemäß einer Ausgestaltung ist das Kettensegment als Rollenkettensegment ausgestaltet. Eine besonders geringe Dehnung während des Betriebs des erfindungsgemäßen Positionierantriebs ergibt sich, wenn das Kettensegment als vorgedehntes Kettensegment ausgestaltet ist.

Als Antriebsmotor kann beispielsweise ein Gleichstrommotor mit einem Planetengetriebe vorgesehen sein. Besonders geeignet ist ein Schrittmotor, bei dem zum Erfassen der Position des zu positionierenden Teils keine weiteren Maßnahmen erforderlich sind, da die Position bereits mit den Ansteuerimpulsen des Schrittmotors festgelegt ist.

Die erfindungsgemäße Solarmodul-Positioniervorrichtung zum Nachführen wenigstens eines Solarmoduls an den aktuellen Sonnenstand zeichnet sich dadurch aus, dass die Solarmodul-Positioniervorrichtung wenigstens einen erfindungsgemäßen Positionierantrieb enthält. Vorzugsweise sind zwei erfindungsgemäße Positionierantriebe vorgesehen, wobei ein erster Positionierantrieb in einer Azimut-Positioniervorrichtung und der zweite Positionierantrieb in einer Elevations-Positioniervorrichtung angeordnet sind.

Die bereits genannten Vorteile des erfindungsgemäßen Positionierantriebs machen sich insbesondere bei einer Solarmodul-Positioniervorrichtung positiv bemerkbar, da eine derartige Solarmodul-Positioniervorrichtung in besonderem Maß den Witterungsverhältnissen ausgesetzt ist. Besonders vorteilhaft sind der einfache Aufbau, die Robustheit, die Verschleißarmut sowie insbesondere der hohe Wirkungsgrad und der geringe Wartungsaufwand.

Besondere Vorteile werden dadurch erreicht, dass die erfindungsgemäße Solarmodul-Positioniervorrichtung weitgehend aus Profilelementen zusammengesetzt ist. Geeignet sind insbesondere Aluminium-Profilelemente, die als Massenprodukt in unterschiedlichen Ausgestaltungen und Abmessungen preiswert erhältlich sind. Aufgrund des vergleichsweise geringen Gewichts und des modularen Aufbaus aus einzelnen Profilelementen kann die erfindungsgemäße Solarmodul-Positioniervorrichtung besonders einfach transportiert und aufgebaut werden.

Weitere vorteilhafte Weiterbildungen und Ausgestaltungen des erfindungsgemäßen Positionierantriebs und der erfindungsgemäßen Solarmodul-Positioniervorrichtung ergeben sich aus der folgenden Beschreibung. Ausführungsbeispiele der Erfindungen sind in der Zeichnung dargestellt und in der nachfolgenden Beschreibung näher erläutert.

Es zeigen:
- Figur 1: eine isometrische Ansicht einer erfindungsgemäßen Solarmodul-Positioniervorrichtung,
- Figur 2: eine Seitenansicht einer erfindungsgemäßen Solarmodul-Positioniervorrichtung,
- Figur 3: einen Querschnitt durch eine erfindungsgemäße Solarmodul-Positioniervorrichtung entlang der in Figur 2 eingetragenen Schnittlinie A'-A",
- Figur 4: eine isometrische Ansicht eines Elevations-Positionierantriebs einer erfindungsgemäßen Solarmodul Positioniervorrichtung,
- Figur 5: eine Draufsicht auf ein zu positionierendes Teil eines erfindungsgemäßen Positionierantriebs,
- Figur 6: eine isometrische Ansicht eines zu positionierenden Teils eines erfindungsgemäßen Positionierantriebs,
- Figur 7: ein vergrößerter Ausschnitt der in Figur 6 wiedergegebenen isometrischen Ansicht und
- Figur 8: eine teilweise geschnittene Ansicht der in Figur 7 wiedergegebenen isometrischen Ansicht.

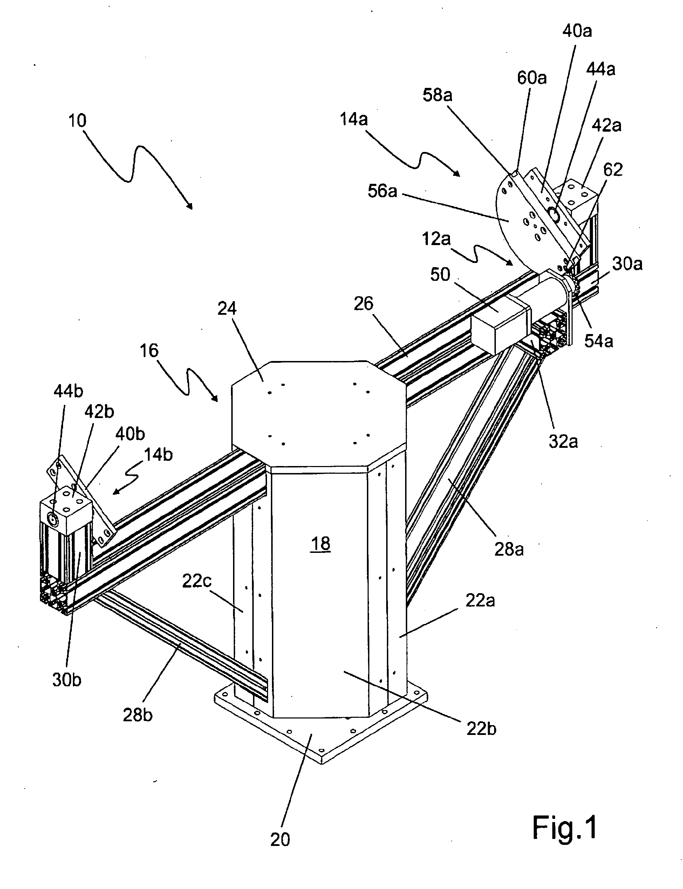

Figur 1 zeigt eine isometrische Ansicht einer erfindungsgemäßen Solarmodul-Positioniervorrichtung 10, die zur Nachführung wenigstens eines nicht näher gezeigten Solarmoduls an den aktuellen Sonnenstand vorgesehen ist. Die Solarmodul-Positioniervorrichtung 10 enthält einen erfindungsgemäßen Positionierantrieb 12a, der im gezeigten Ausführungsbeispiel Teil einer Elevations-Positioniervorrichtung 14a ist. Weiterhin enthält die Solarmodul-Positioniervorrichtung 10 eine Azimut-Positioniervorrichtung 16, die ebenfalls einen in Figur 1 aufgrund der Unterbringung in einer Verkleidung 18 nicht sichtbaren Positionierantrieb aufweist.

Die Azimut-Positioniervorrichtung 16 ist drehbar in Bezug auf eine im montierten Zustand der Solarmodul-Positioniervorrichtung 10 mit dem Boden verankerten Bodenplatte 20. Die Verkleidung 18 enthält vorzugsweise mehrere seitliche Verkleidungsteile 22a, 22b, 22c sowie einen Deckel 24.

Die Solarmodul-Positioniervorrichtung 10 ist hauptsächlich aus Profilelementen zusammengesetzt, auf deren Außenseiten vorzugsweise Nuten eingebracht sind, in welche Schrauben mit Mehrkantköpfen, beispielsweise Vierkantköpfen oder Sechskantköpfen und/oder entsprechend ausgestaltete Muttern eingeschoben werden können, die von den Begrenzungen der Nuten ohne weitere zusätzliche Maßnahmen fixiert werden.

In Figur 1 sind ein Querträger 26, zwei Verstrebungen 28a, 28b, zwei Lagerträger 30a, 30b sowie ein Antriebsmotorträger 32a sichtbar, die aus Profilelementen gefertigt sind.

Die Profilelemente 26, 28a, 28b, 30a, 30b, 32a ermöglichen eine einfache Montage der Solarmodul-Positioniervorrichtung 10, ausgehend von den separaten Profilelementen 26, 28a, 28b, 30a, 30b, 32a, die platzsparend transportiert werden können. Vorzugsweise sind die Profilelemente 26, 28a, 28b, 30a, 30b, 32a aus Aluminium gefertigt, sodass sich ein vergleichsweise geringes Gewicht der Solarmodul-Positioniervorrichtung 10 ergibt. Dadurch vereinfachen sich der Transport und es ergeben sich insbesondere bei der Handhabung der Einzelteile im Rahmen der Montage der Solarmodul-Positioniervorrichtung 10 Vorteile. Weiterhin sind die Aluminium-Profilelemente aufgrund der Massenfertigung in mehreren Standardabmessungen, beispielsweise 50 x 50, 50 x 100 oder 100 x 100 (mm), besonders preiswert erhältlich, sodass sich weitere Kostenvorteile ergeben.

Das wenigstens eine, in Figur 1 nicht näher gezeigte Solarmodul, bei dem es sich beispielsweise um ein thermisches Solarmodul oder vorzugsweise um ein Fotovoltaik-Solarmodul handelt, ist im montierten Zustand mit einer Solarmodul-Montageplatte 40a der Elevations-Positioniervorrichtung 14a verschraubt, die mittels eines in einer Lageraufnahme 42a gelagerten Lagerzapfens 44a um eine horizontale Achse drehbar gelagert ist, sodass der Elevationswinkel eingestellt werden kann. Im gezeigten Ausführungsbeispiel sind zwei Elevations-Positioniervorrichtungen 14a, 14b gezeigt, die jeweils am Ende des Querträgers 26 angeordnet sind. Durch den Einsatz von wenigstens zwei Elevations-Positioniervorrichtungen 14a, 14b können problemlos größere Solarmodule montiert und positioniert werden.

Im gezeigten Ausführungsbeispiel wird davon ausgegangen, dass lediglich einer Elevations-Positioniervorrichtung 14a ein erfindungsgemäßer Positionierantrieb 12a zugeordnet ist. Der Positionierantrieb 12a enthält einen Antriebsmotor 50, der an einer Antriebsmotor-Montageplatte 52a befestigt ist. Der Antriebsmotor 50 treibt ein Ritzel 54a an, das in ein in Figur 1 nicht eingezeichnetes Kettensegment eingreift, das an einem zu positionierenden Teil 56a fixiert ist. Das zu positionierende Teil 56a enthält zwei Kettenführungen 58a, 60a sowie einen Gewindestift 62.

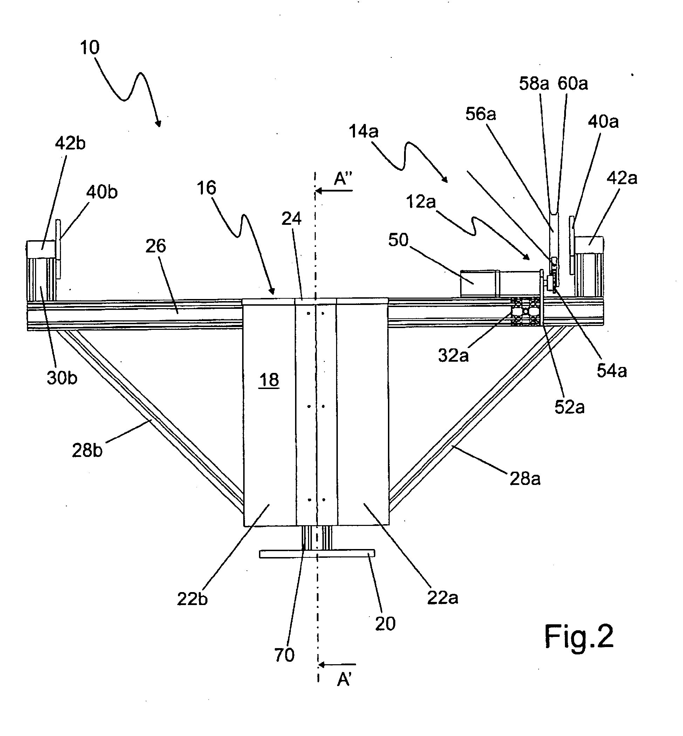

Figur 2 zeigt eine Seitenansicht der erfindungsgemäßen Solarmodul-Positioniervorrichtung 10. Diejenigen in Figur 2 gezeigten Teile, die mit den in Figur 1 gezeigten Teilen übereinstimmen, tragen jeweils dieselben Bezugszeichen. Figur 2 gibt einen Blick auf einen Mittelträger 70 der Azimut-Positioniervorrichtung 16 frei, auf welchem die gesamte Solarmodul-Positioniervorrichtung 10 abgestützt ist. Der Mittelträger 70 ist vorzugsweise ebenfalls aus einem Profilelement hergestellt. In Figur 2 ist eine Schnittlinie A' - A" entlang der Längsachse der Azimut-Positioniervorrichtung 16 eingetragen, die zugleich Mittellinie ist.

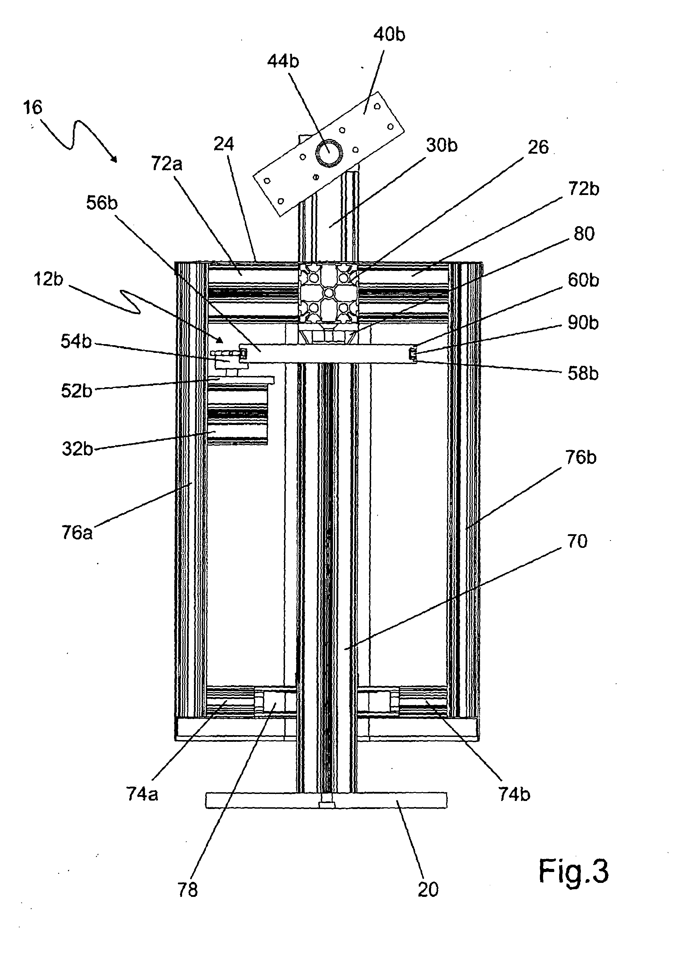

Figur 3 zeigt einen Querschnitt durch die Solarmodul-Positioniervorrichtung 10 entlang der in Figur 2 eingetragenen Schnittlinie A' - A". Der Querschnitt gibt einen Blick auf den Innenbereich der Azimut-Positioniervorrichtung 16 frei, die ebenfalls im Wesentlichen auf der Grundlage von Profilelementen aufgebaut ist. Diejenigen in Figur 3 gezeigten Teile, die mit den in den vorhergehenden Figuren gezeigten Teilen übereinstimmen, tragen jeweils wieder dieselben Bezugszeichen.

Vorgesehen sind zwei obere Querträger 72a, 72b sowie zwei untere Querträger 74a, 74b. Die äußeren Enden der oberen und unteren Querträger 72a, 72b, 74a, 74b sind jeweils an Längsträgern 76a, 76b befestigt. Die innenliegenden Enden der beiden oberen Querträger 72a, 72b sind am Querträger 26 befestigt.

Die Azimut-Positioniervorrichtung 16 ist am Mittelträger 70 abgestützt und in Bezug auf den Mittelträger 70 drehbar gelagert. Hierzu sind die unteren Querträger 74a, 74b an einem Kugellager 78, vorzugsweise einem Rillenkugellager abgestützt, während die Last der gesamten Solarmodul-Positioniervorrichtung 10 mit dem montierten wenigstens einen Solarmodul von einem weiteren Kugellager 80, vorzugsweise einem Schrägkugellager, aufgenommen wird.

Zur Drehung der Azimut-Positioniervorrichtung 16 ist ein weiterer Positionierantrieb 50b vorgesehen, der einen nicht näher gezeigten Antriebsmotor, ein Ritzel 54b sowie ein zu positionierendes Teil 56b aufweist. Der Antriebsmotor, der an einer von einem weiteren Antriebsmotorträger 32b getragenen Antriebsmotor-Montageplatte 52b befestigt ist, treibt wieder ein Ritzel 54b an, das in ein Kettensegment 90b eingreift, welches am weiteren zu positionierenden Teil 56b fixiert ist. Das weitere zu positionierende Teil 56b enthält wieder zwei Kettenführungen 58b, 60b.

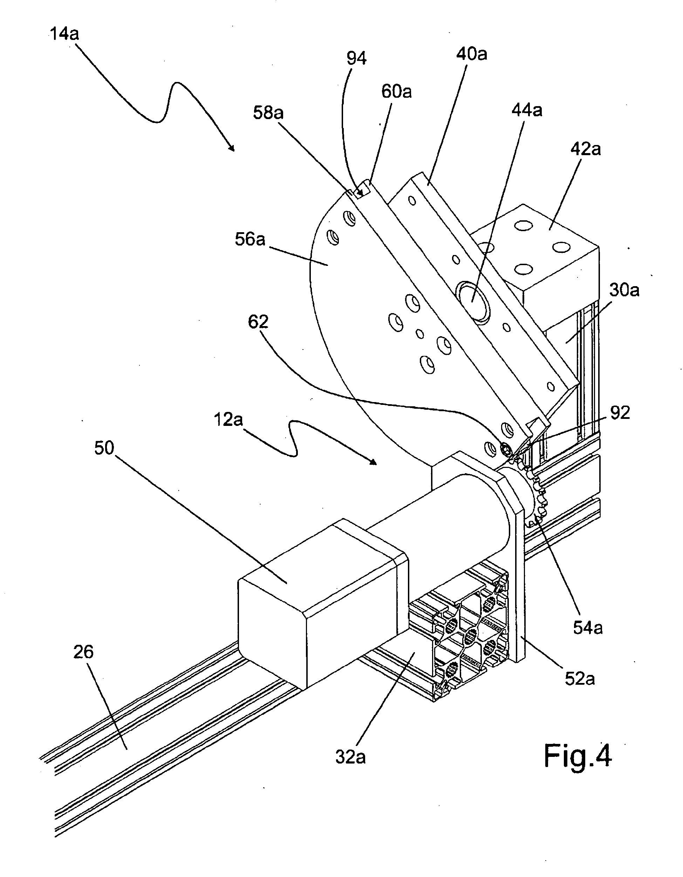

Figur 4 zeigt die Elevations-Positioniervorrichtung 14a, die den erfindungsgemäßen Positionierantrieb 12a enthält, in einer vergrößerten Darstellung. Die dargestellten Teile sind mit denselben Bezugszeichen wie in den Figuren 1 und 2 bezeichnet. Figur 4 gibt einen Blick auf eine Kettenspannelement-Aufnahme 92, in welche der Gewindestift 62 eingeschraubt ist, sowie auf eine Oberfläche 94 des zu positionierenden Teils 56a frei, auf welcher im montierten Zustand des Positionierantriebs 12a das in Figur 4 nicht gezeigte Kettensegment abgestützt ist.

Der Aufbau sowie die Funktionsweise des erfindungsgemäßen Positionierantriebs 12a werden anhand der folgenden Figuren näher erläutert.

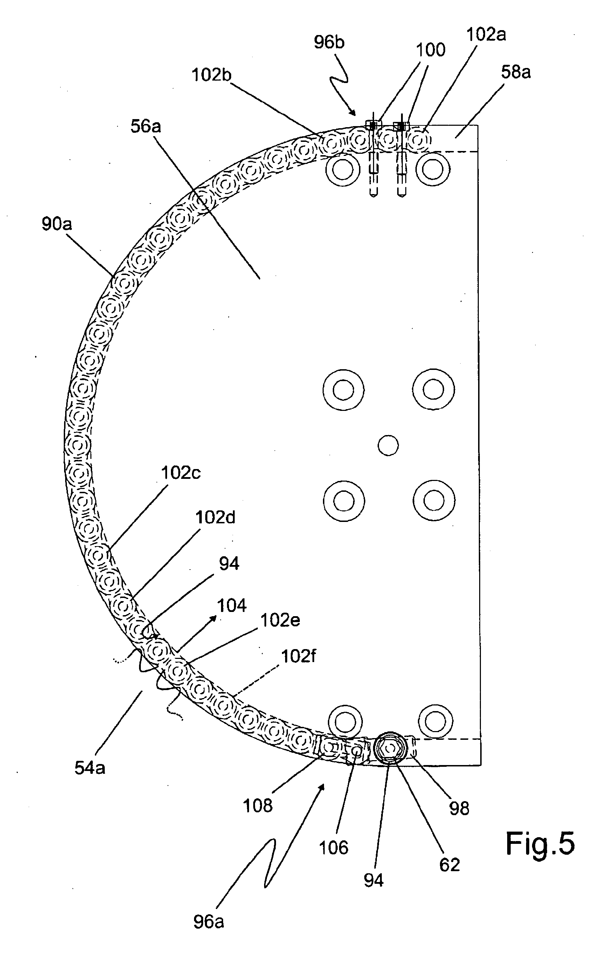

Figur 5 zeigt eine Draufsicht auf das zu positionierende Teil 56a, an welchem ein Kettensegment 90a fixiert ist. Im gezeigten Ausführungsbeispiel wird davon ausgegangen, dass das Kettensegment 90a ausschließlich an einem ersten Kettensegment-Ende 96a und am zweiten Kettensegment-Ende 96b am zu positionierenden Teil 56a fixiert ist. Am ersten Kettensegment-Ende 96a erfolgt die Fixierung des Kettensegments 90a mit einem Kettenspannelement 98 und am zweiten Kettensegment-Ende 96b mit zumindest einem Fixierelement 100, das beispielsweise als Schraube realisiert ist, welche durch eine Öffnung eines Kettenglieds 102a, 102b geführt und mit dem zu positionierenden Teil 56a verschraubt ist.

Wesentlich ist, dass zumindest diejenigen Kettenglieder 102c, 102d, 102e, 102f des Kettensegments 90a auf der Oberfläche 94 des zu positionierenden Teils 56a abgestützt sind, in welche das Ritzel 54a eingreift. Im gezeigten Ausführungsbeispiel wird davon ausgegangen, dass das zu positionierende Teil 56a eine Scheibe ist, die um einen Winkel von beispielsweise +/- 90 Grad gedreht werden kann. Die Kettenglieder 102c, 102d, 102e, 102f des Kettensegments 90a, in welche das Ritzel 54a eingreifen kann, sind deshalb im gezeigten Ausführungsbeispiel in einem Winkelbereich von nahezu 180 Grad angeordnet.

Die Abstützung entspricht einer Fixierung des Kettensegments 90a in dem Sinne, dass die einzelnen Kettenglieder 102c, 102d, 102e, 102f zumindest bei einem Eingriff der Zähne des Ritzels 54a nicht in radialer Richtung 104 des Ritzels 54a ausweichen können. Im gezeigten Ausführungsbeispiel wird die Abstützung dadurch erreicht, dass die Oberfläche 94 auf der diejenigen Kettenglieder 102c, 102d, 102e, 102f des Kettensegments 90a abgestützt sind, in welche das Ritzel 54a eingreift, konvex in Bezug auf das Ritzel 54a gekrümmt ist.

Durch die konvexe Krümmung wird erreicht, dass der Kontakt zwischen den einzelnen Kettengliedern 102c, 102d, 102e, 102f und dem Ritzel 54a auf ein minimales Maß begrenzt wird, wobei der untere Grenzfall dadurch gegeben ist, dass lediglich ein Zahn des Ritzels 54a vollständig in eine Öffnung eines Kettenglieds 102c, 102d, 102e, 102f eingreift.

Durch den minimalen Kontakt zwischen dem Ritzel 54a und den Kettengliedern 102c, 102d, 102e, 102f wird eine minimale Reibung entsprechend einem hohen Wirkungsgrad des Positionierantriebs 12a erreicht, sodass der elektrische Energiebedarf zur Positionierung des zu positionierenden Teils 56a minimal wird. Einem minimalen elektrischen Energiebedarf kommt insbesondere Bedeutung beim Dauerbetrieb des erfindungsgemäßen Positionierantriebs 12a, 12b zu, wenn der Positionierantrieb 12a, 12b zur Positionierung eines Fotovoltaik-Solarmoduls eingesetzt wird, um einen möglichst hohen Wirkungsgrad beziehungsweise eine möglichst hohe Ausbeute an elektrischer Energie zu erzielen.

Die Verzahnung zwischen dem Ritzel 54a, 54b und dem Kettensegment 90a, 90b wird erfindungsgemäß als Triebstockverzahnung realisiert. Hierzu werden die Zähne des Ritzels 54a, 54b derart bemessen, dass zwischen dem Ritzel 54a, 54b und dem Kettensegment 90a, 90b die Triebstockverzahnung vorliegt. Die Bemessung der Triebstockverzahnung kann aus dem eingangs genannten Stand der Technik oder aus weiterer Grundlagenliteratur des Maschinenbaus entnommen werden, sodass sich an dieser Stelle eine Wiedergabe der konkreten Bemessungen erübrigt. Die Triebstockverzahnung eignet sich insbesondere für robuste Antriebe, sodass beim Einsatz im erfindungsgemäßen Positionierantrieb 12a, 12b, insbesondere bei einem Einsatz des erfindungsgemäßen Positionierantriebs 12a, 12b in der Solarmodul-Positioniervorrichtung 10, bei der bezogen auf die Zeit nur wenige Positionierungen vorzunehmen sind, nur ein geringer Verschleiß zu erwarten ist. Anhand von Langzeittests hat sich die Erwartung bestätigt. Der erfindungsgemäße Positionierantrieb 12a, 12b wird dadurch besonders wartungsarm beziehungsweise über einen langen Betriebszeitraum sogar wartungsfrei.

Im gezeigten Ausführungsbeispiel wird davon ausgegangen, dass am zweiten Kettensegment-Ende 96a das Kettenspannelement 98 vorgesehen ist, das in der Kettenspannelement-Aufnahme 94 geführt und vom Gewindestift 62 fixiert ist. Das Kettenspannelement 98 ist zur Hälfte wie ein normales Kettenglied 102a, 102b, 102c, 102d, 102e, 102f ausgestaltet, durch welches ein Kettengliedstift 106 zur drehbaren Lagerung des Kettenspannelements 98 geführt ist und welches von einem herkömmlichen Kettenschloss 108 gesichert ist.

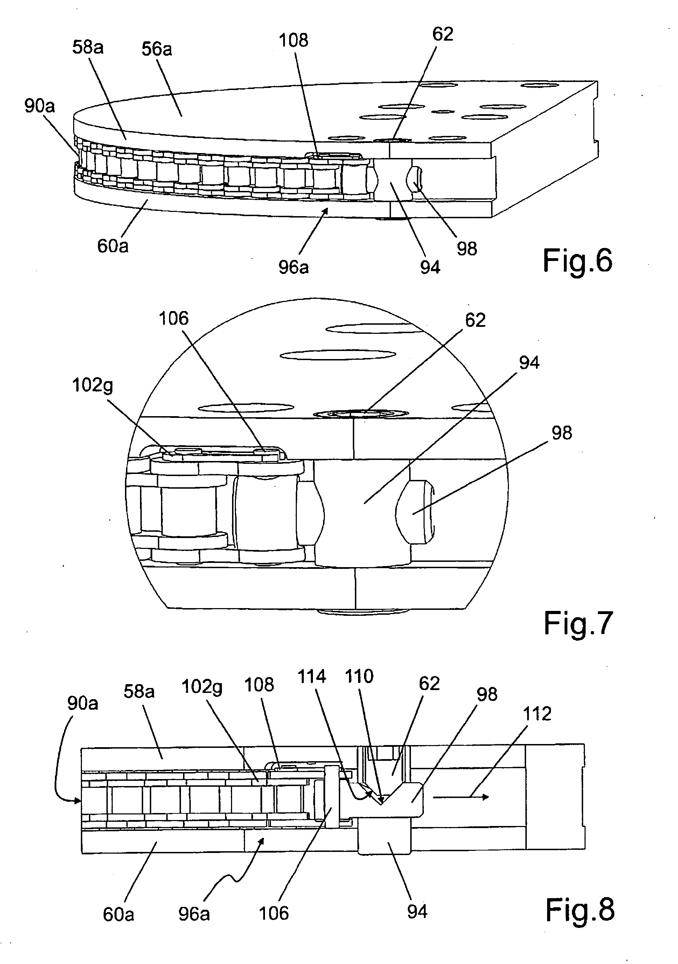

Figur 6 zeigt eine isometrische Ansicht des zu positionierenden Teils 56a mit einem Blick auf das erste Kettensegment-Ende 96a und Figur 7 zeigt einen vergrößerten Ausschnitt des Bereichs um das Kettenspannelement 98. Insbesondere Figur 7 verdeutlicht die Anbindung des Kettenspannelements 98 an das erste Kettenglied 102g mittels des Kettengliedstifts 106 sowie mittels des Kettenschlosses 108. Aus Figur 6 geht hervor, wie die beiden Kettenführungen 58a, 60a die Position des Kettensegments 90a stabilisieren. Gemäß einer Ausgestaltung kann vorgesehen sein, dass die beiden Kettenführungen 58a, 60a das Kettensegment 90a im äußeren Bereich vollständig abdecken, wie im Ausführungsbeispiel gemäß Figur 6 gezeigt.

Figur 8 zeigt eine teilweise geschnittene Ansicht der in den Figuren 6 und 7 wiedergegebenen isometrischen Ansicht. Gemäß einer Ausgestaltung ist im Kettenspannelement 98 eine Kerbe 110 quer zur Kettensegmentrichtung 112 eingebracht, in welche das vordere Ende des Gewindestifts 62 mehr oder weniger eintaucht, dessen vorderes Ende vorzugsweise eine Abschrägung 114 aufweist.

Durch das Eindringen des Gewindestifts 62 in die Kerbe 110 wird die Kettenspannung durch eine Kraftkomponente in Kettensegmentrichtung 112 hergestellt. Gemäß der besonders vorteilhaften Ausgestaltung, dass das Kettensegment 90a aus einer vorgedehnten Rollenkette bereitgestellt wird, muss während der gesamten Betriebsdauer des erfindungsgemäßen Positionierantriebs 12a mit nur einer äußerst geringen weiteren Dehnung des Kettensegments 90a gerechnet werden, wobei anhand von Lebensdauerversuchen festgestellt wurde, dass mit dem Gewindestift 62 in Verbindung mit der im Kettenspannelement 98 vorgesehenen Kerbe 110 ein Nachspannen über die gesamte Betriebsdauer des erfindungsgemäßen Positionierantriebs 12a beziehungsweise der erfindungsgemäßen Solarmodul-Positioniervorrichtung 10 von einigen Jahrzehnten möglich ist. Eine derartig vorgedehntes Kettensegment 90a kann handelsüblich bezogen werden.

Der anhand der Figuren 5 bis 8 näher beschriebene Positionierantrieb 12a kann ohne Änderungen als Positionierantrieb 12b in der Azimut-Positioniervorrichtung 16 eingesetzt werden.

Als Antriebsmotor 50 ist ein Gleichstrommotor geeignet, der besonders preiswert erhältlich ist. Zur Erfassung der Ist-Position des zu positionierenden Teils 56a, 56b wird zweckmäßigerweise ein nicht näher gezeigter Positionssensor eingesetzt. Hilfsweise kann die Position anhand des dem Gleichstrommotor zugeführten Signals gewonnen werden.

Als Antriebsmotor 50 ist insbesondere ein Schrittmotor geeignet, bei dem kein weiterer Positionssensor erforderlich ist, da die Position des zu positionierenden Teils 56a, 56b bereits aus den Ansteuerimpulsen gewonnen werden kann beziehungsweise durch die Ansteuerimpulse festgelegt ist.

Dem Antriebsmotor 50 kann ein Getriebe vorgeschaltet werden, wobei insbesondere ein Planetengetriebe aufgrund des geringen Getriebeverlustes geeignet ist.

## Patentansprüche

1. Positionierantrieb mit einem stationär angeordneten Antriebsmotor (50), der ein Ritzel (54a, 54b) antreibt, das in Kettenglieder (102a, 102b, 102c, 102d, 102e, 102f) eines Kettensegments (90a, 90b) eingreift, welches einem zu positionierenden Teil (56a, 56b) zugeordnet ist, wobei zumindest diejenigen Kettenglieder (102c, 102d, 102e, 102f) des Kettensegments (90a, 90b) auf der Oberfläche (94) des zu positionierenden Teils (56a, 56b) abgestützt sind, in welche das Ritzel (54a, 54b) eingreift und wobei zumindest die zur Abstützung der Kettenglieder (102c, 102d, 102e, 102f) vorgesehene Oberfläche (94) in Bezug auf das Ritzel (54a, 54b) konvex gekrümmt ist, **dadurch gekennzeichnet, dass** die Zähne des Ritzels (54a, 54b) derart bemessen sind, dass zwischen dem Ritzel (54a, 54b) und dem Kettensegment (90a, 90b) eine Triebstockverzahnung vorliegt.

2. Positionierantrieb nach Anspruch 1, **dadurch gekennzeichnet, dass** auf beiden Seiten des Kettensegments (90a, 90b) Kettenführungen (58a, 58b, 60a, 60b) angeordnet sind.

3. Positionierantrieb nach Anspruch 1, **dadurch gekennzeichnet, dass** ausschließlich die beiden Enden (96a, 96b) des Kettensegments (90a, 90b) am zu positionierenden Teil (56a, 56b) fixiert sind.

4. Positionierantrieb nach Anspruch 1 oder 3, **dadurch gekennzeichnet, dass** an einem Ende (96a) des Kettensegments (90a, 90b) ein Kettenspannelement (98) vorgesehen ist.

5. Positionierantrieb nach Anspruch 4, **dadurch gekennzeichnet, dass** das Kettenspannelement (98) eine quer zur Kettensegment-Richtung (112) eingebrachte Kerbe (110) aufweist.

6. Positionierantrieb nach Anspruch 5, **dadurch gekennzeichnet, dass** ein am zu positionierenden Teil (56a, 56b) angeordneter Gewindestift (62) vorgesehen ist, der am vorderen Ende eine Abschrägung (114) aufweist, die mit der Kerbe (110) zum Spannen des Kettensegments (90a, 90b) zusammenwirkt.

7. Positionierantrieb nach Anspruch 1, **dadurch gekennzeichnet, dass** das Kettensegment (90a, 90b) als Rollenkettensegment ausgestaltet ist.

8. Positionierantrieb nach Anspruch 1 oder 7, **dadurch gekennzeichnet, dass** das Kettensegment (90a, 90b) vorgedehnt ist.

9. Positionierantrieb nach Anspruch 1, **dadurch gekennzeichnet, dass** der Antriebsmotor (50) als Schrittmotor oder als Gleichstrommotor ausgestaltet ist.

10. Positionierantrieb nach Anspruch 1, **dadurch gekennzeichnet, dass** dem Antriebsmotor (50) ein Planetengetriebe vorgeschaltet ist.

11. Solarmodul-Positioniervorrichtung zum Nachführen eines wenigstens eines Solarmoduls an den aktuellen Sonnenstand, **dadurch gekennzeichnet, dass** die Solarmodul-Positioniervorrichtung (10) wenigstens einen Positionierantrieb (12a, 12b) nach einem der vorhergehenden Ansprüche enthält.

12. Solarmodul-Positioniervorrichtung nach Anspruch 11, **dadurch gekennzeichnet, dass** die Solarmodul-Positioniervorrichtung (10) einen Elevations-Positionierantrieb (14a, 14b) und einen Azimut-Positionierantrieb (16) enthält und dass im Elevations-Positionierantrieb (14a, 14b) und/oder im Azimut-Positionierantrieb (16) wenigstens ein Positionierantrieb (12a, 12b) nach einem der Ansprüche 1 bis 10 angeordnet ist.

13. Solarmodul-Positioniervorrichtung nach Anspruch 12, **dadurch gekennzeichnet, dass** die Solarmodul-Positioniervorrichtung (10) aus Profilelementen (26a, 28a, 28b, 30a, 30b, 32a, 32b, 70, 72a, 72b, 74a, 74b, 76a, 76b) zusammengesetzt ist.

14. Solarmodul-Positioniervorrichtung nach Anspruch 12, **dadurch gekennzeichnet, dass** die Azimut-Positioniervorrichtung 16 mit wenigstens einem seitlichen Verkleidungsteil (22a, 22b, 22c) verkleidet und mit einem Deckel (24) abgedeckt ist.
